# FASCICULE DE BREVET EUROPEEN

(11) **EP 0 852 684 B1**
(45) Date de publication et mention de la délivrance du brevet: **16.10.2002**
(21) Numéro de dépôt: 96932632.1
(22) Date de dépôt: 23.09.1996
(51) Int. Cl.: F16L 55/045, F17D 1/20

(54) **RESERVOIR HYDROPNEUMATIQUE ANTI-BELIER AVEC DISPOSITIF D'ADMISSION ET DE REGULATION D'AIR, PROCEDE D'ADMISSION D'AIR**
HYDROPNEUMATISCHES SCHWALLSCHUTZRESERVOIR MIT EINER VORRICHTUNG ZUR REGELBAREN LUFTZUFUHR SOWIE VERFAHREN ZUR LUFTZUFUHR
HYDROPNEUMATIC ANTI-HAMMER TANK WITH AN AIR INTAKE AND CONTROL DEVICE, AND AIR INTAKE METHOD

(30) Priorité: 25.09.1995 FR 9511220
(43) Date de publication de la demande: 15.07.1998
(73) Titulaire: CHARLATTE S.A., 89400 Migennes (FR)
(72) Inventeur: ROCHE, Emile, F-01000 Saint-Denis-les-Bourg (FR)
(74) Mandataire: Casalonga, Axel
(86) Numéro de dépôt international: FR9601478
(87) Numéro de publication internationale: WO97012171

(56) Documents cités:
- EP-A- 0 048 092
- EP-A- 0 107 459
- EP-A- 0 617 227
- DE-A- 4 318 553
- FR-A- 820 152
- GB-A- 2 165 003
- US-A- 4 687 639
- SOVIET INVENTIONS ILLUSTRATED Section PQ, Week 9443 14 Décembre 1994 Derwent Publications Ltd., London, GB; Class Q66, AN 94-348882 XP002002589 & SU,A,1 822 920 (MAKHARADZE)
- PATENT ABSTRACTS OF JAPAN vol. 12, no. 490 (M-779) [3337] , 21 Décembre 1988 & JP,A,63 210500 (EE T K.K.)
- I.S.A. TRANSACTIONS, vol. 24, no. 3, 1985, RESEARCH TRIANGLE PARK,NC, USA, pages 13-21, XP002002588 J.R.CHESTER ET AL.: "pipeline pressure relief valves"

## Description

La présente invention concerne un réservoir hydropneumatique anti-bélier avec dispositif d'admission d'air dans une conduite hydraulique, dispositif de régulation d'air pour ce réservoir hydropneumatique anti-bélier monté sur une conduite hydraulique et procédé d'admission d'air dans une conduite hydraulique munie de ce réservoir hydropneumatique. La conduite hydraulique peut être un réseau de distribution en eau potable, d'irrigation, ou d'évacuation d'eaux usées ou de liquides chimiques.

Le réservoir hydropneumatique fonctionnant comme réservoir anti-bélier d'une conduite hydraulique compense les effets de dépression et de surpression provoqués, par exemple, par un arrêt d'une pompe ou une fermeture de vanne. Le rôle du réservoir hydropneumatique est, alors, de dissiper une partie de l'énergie cinétique de la veine de liquide.

Un problème important pour assurer le bon fonctionnement du réservoir hydropneumatique réside dans le maintien d'un volume d'air sensiblement constant, pour une pression donnée, dans le réservoir. En effet, le réservoir hydropneumatique contient, en fonctionnement, de l'eau ou un liquide quelconque en écoulement dans la conduite, et de l'air enfermé dans le réservoir juste au-dessus de la surface d'eau ou du liquide. La dissolution de l'air dans ce liquide crée, pour une pression donnée, une variation du volume d'air enfermé dans le réservoir. Il est donc nécessaire d'apporter une solution permettant alors d'introduire de l'air dans le réservoir.

D'une manière générale, l'apport en air dans un réservoir hydropneumatique est assuré au moyen d'un compresseur d'air ou d'un injecteur d'air extérieur.

Le compresseur d'air a pour inconvénient principal que l'air introduit dans le réservoir contient des gouttelettes ou de la vapeur d'huile. La présence d'huile ainsi apportée dans le réservoir est particulièrement gênante dans le cas d'une conduite d'alimentation en eau potable, car cela pose des problèmes sanitaires.

Les injecteurs d'air permettent de supprimer les entraînements d'huile dans l'air injecté au réservoir hydropneumatique. Ils ne permettent pas de compenser avec exactitude la dissolution d'air dans le réservoir. En effet, seule l'expérience permet jusqu'à présent de fixer le volume d'air supplémentaire à apporter au réservoir en fonction de la contenance du réservoir et de la pression d'eau dans la canalisation, étant donné que la dissolution de l'air au contact de l'eau dépend de nombreux facteurs. Comme conséquence, il peut se produire, soit une insuffisance, soit un surplus d'air injecté dans le réservoir qui entraînent, dans le premier cas, une protection insuffisante des conduites et, dans le second cas, une évacuation de l'excès d'air dans la conduite donnant naissance à des coups de bélier.

En outre l'injecteur d'air classique souffre d'autres imperfections : utilisation approximative du volume disponible dans l'injecteur pour le cycle de remplissage en eau (injection d'air dans le réservoir)/vidange (introduction de l'air dans le dispositif), l'absence de moyens de protection de la soupape d'admission d'air du dispositif contre le risque de détérioration par contact avec l'eau, notamment les eaux usées, l'absence de préoccupation de la qualité de l'air injecté dans le réservoir, et dans le cas d'une canalisation avec pompe immergée, l'utilisation d'un siphon de vidange de la conduite qui crée une perte en rendement de la pompe immergée à cause de l'évacuation permanente d'eau pompée par le siphon, et qui à chaque démarrage de la pompe immergée, entraîne nécessairement une injection de l'air dans le réservoir même si une telle injection n'est pas demandée.

On connaît par la demande de brevet européen n° 0617227 (ROCHE) un système électronique de régulation d'air pour réservoir hydropneumatique comprenant une chambre, un moyen de remplissage d'eau de la chambre, un moyen de vidange d'eau de la chambre, un moyen d'introduction automatique d'air dans la chambre pendant la vidange, un moyen d'injection automatique de l'air de la chambre vers le réservoir pendant le remplissage, un moyen de commande relié à un détecteur de dépassement d'un niveau d'eau contenu dans le réservoir et un moyen de remplissage et de vidange de la chambre. Ce système peut entraîner un surcoût de l'installation notamment lorsqu'il doit être installé loin d'une source d'énergie électrique.

La présente invention a pour objet de remédier aux inconvénients précités en proposant un réservoir hydropneumatique anti-bélier avec dispositif d'admission d'air dans une conduite hydraulique, dispositif de régulation d'air de ce réservoir hydropneumatique anti-bélier et procédé d'admission d'air dans une conduite hydraulique munie de ce réservoir hydropneumatique anti-bélier qui permettent d'introduire un volume d'air correspondant au complément nécessaire au réservoir, sans apport d'énergie extérieure, par exemple électrique.

L'invention a, en outre, pour objet un dispositif d'admission d'air protégé contre la détérioration ou le colmatage au contact du liquide.

L'invention a encore pour objet un dispositif d'admission d'air dans une conduite qui soit particulièrement fiable et simple à mettre en oeuvre.

Le réservoir hydropneumatique anti-bélier avec dispositif de régulation d'air dans une conduite hydraulique comprend un dispositif d'admission d'air capable d'admettre de l'air lors d'une chute de pression du liquide dans la conduite, le réservoir hydropneumatique étant en communication avec la conduite. En outre le réservoir comprend un moyen de détection de la pression du liquide contenu dans le réservoir hydropneumatique, ledit moyen de détection comprenant une capacité étanche de volume variable et un moyen d'ouverture d'un orifice capable d'introduire un volume d'air extérieur dans un réservoir en déficit d'air, ledit orifice étant en communication avec une partie comprenant ledit réservoir ou une partie de conduite en amont dudit réservoir, ou une chambre de stockage en communication avec ledit réservoir.

Dans un mode de réalisation de l'invention, le moyen d'ouverture comprend une partie plane solidaire d'une partie mobile de la capacité en contact avec une extrémité d'un tube en communication avec ladite partie ou chambre, de façon à obturer ladite extrémité du tube et capable de libérer l'extrémité du tube pour admettre de l'air dans ladite partie ou chambre.

Dans un mode de réalisation de l'invention, la capacité est définie par une partie fixe solidaire d'un tube en communication avec le réservoir, une partie mobile et un moyen d'application d'une force tendant à réduire le volume de la capacité et à libérer l'extrémité du tube en communication avec ladite partie ou chambre, l'étanchéité entre les parties fixe et mobile étant assurée par un joint souple. Avantageusement le moyen d'application de la force comprend un ressort ou un contrepoids.

Dans un autre mode de réalisation de l'invention, la capacité étanche comprend une paroi plane déformable capable d'obturer l'extrémité d'un tube en communication avec ladite partie ou chambre.

Grâce à l'invention, on peut introduire une quantité d'air dans une conduite sans aucune alimentation électrique.

Ledit moyen de détection de la pression peut être, en communication avec la partie supérieure du réservoir hydropneumatique anti-bélier.

Dans un mode de réalisation de l'invention, l'orifice est en communication avec une chambre formée par ladite partie de la conduite située à proximité d'un moyen de pompage, avantageusement, entre le moyen de pompage et un clapet disposé en amont de la tubulure de raccordement avec le réservoir hydropneumatique anti-bélier.

Dans un mode de réalisation de l'invention, l'orifice est en communication avec l'extrémité supérieure d'une chambre de stockage à vidange commandée par le dispositif d'admission d'air, cette chambre étant en communication avec ladite partie.

Avantageusement la chambre de stockage comprend une bonde de vidange située à son extrémité inférieure, solidaire d'une tige fixée au moyen d'ouverture du dispositif d'admission d'air pour ouvrir la bonde lors de l'admission de l'air et est en communication avec la deuxième partie de la conduite.

Avantageusement, la partie supérieure de la chambre de stockage est en communication avec le réservoir hydropneumatique anti-bélier par un tube, l'air contenu dans la chambre de stockage pouvant ainsi s'échapper dans le réservoir hydropneumatique anti-bélier.

Dans un mode de réalisation de l'invention, ce tube est muni d'un clapet pour empêcher l'eau contenue dans le réservoir hydropneumatique de s'écouler dans la chambre de stockage.

Dans un autre mode de réalisation de l'invention le tube reliant la conduite et la chambre de stockage est de faible diamètre ou muni d'un étranglement créant des pertes de charge singulières, éventuellement réglables, réduisant les apports d'eau dans la chambre de stockage, à partir de la conduite et via le tube.

Dans un mode de réalisation de l'invention, le réservoir hydropneumatique anti-bélier fonctionnant alternativement en réservoir hydropneumatique classique et en cheminée d'équilibre, le moyen de détection de la pression du liquide contenu dans une première partie de la conduite est en communication avec une première partie du réservoir hydropneumatique formant chambre de compression, et le moyen d'ouverture d'un orifice en communication avec ladite partie ou chambre est en communication avec une deuxième partie du réservoir hydropneumatique de façon à faire entrer de l'air lorsque la pression d'air dans le réservoir hydropneumatique est insuffisante.

Avantageusement, le réservoir hydropneumatique est muni à son extrémité supérieure d'un tube plongeant pouvant être muni d'un moyen de freinage sur l'air au remplissage pour éviter notamment que l'eau n'atteigne le dispositif d'admission d'air avant sa fermeture, lors du remplissage du réservoir hydropneumatique.

Selon l'invention, le procédé d'admission d'air dans une conduite hydraulique muni d'un réservoir hydropneumatique anti-bélier en communication avec une première partie de la conduite, est le suivant :
- en régime transitoire lors d'une phase de dépression du liquide dans la conduite, la baisse de la pression de l'air contenu dans le réservoir hydropneumatique, en deçà d'une valeur de réglage, commande, sans apport d'énergie extérieure, l'admission dans une deuxième partie de la conduite d'une quantité d'air fonction notamment de la différence entre la pression de l'air dans le réservoir hydropneumatique et la valeur de réglage,
- lors d'une phase d'augmentation de la pression, l'admission de l'air dans la deuxième partie de la conduite est stoppée,
- au démarrage suivant du mouvement du liquide dans la conduite, l'air admis dans la deuxième partie de la conduite passe dans la première partie de la conduite puis dans le réservoir hydropneumatique avec ou sans l'intermédiaire d'un piège à air.

Selon l'invention, le procédé d'admission d'air dans une conduite munie d'un réservoir hydropneumatique en communication avec une première partie de la conduite, peut être le suivant :
- en régime transitoire, lors d'une phase de dépression, la baisse de la pression de l'air contenu dans le réservoir hydropneumatique, en deçà d'une valeur de réglage, commande, sans apport d'énergie extérieure, la vidange du liquide contenu dans une chambre de stockage et l'admission dans ladite chambre de stockage d'une quantité d'air fonction notamment de la différence entre la pression d'air dans le réservoir hydropneumatique et la valeur de réglage,
- lors d'une phase d'augmentation de la pression, l'admission d'air dans la chambre de stockage et la vidange du liquide contenu dans ladite chambre de stockage sont stoppées. Cette chambre de stockage se remplit ensuite progressivement de liquide grâce au mouvement de ce liquide dans la conduite, l'air contenu dans ladite chambre de stockage s'échappant progressivement dans le réservoir hydropneumatique. Ce mouvement de liquide est, soit une reprise d'écoulement due, par exemple, au démarrage d'un moyen de pompage, soit une continuation d'écoulement.

L'invention sera mieux comprise et d'autres avantages apparaîtront à la description détaillée de quelques modes de réalisation pris à titre nullement limitatif et illustrés par les dessins annexés, sur lesquels :
la figure 1 est une vue schématique en coupe du dispositif d'admission d'air de l'invention selon un premier mode de réalisation,
la figure 2 est une vue schématique en coupe du dispositif d'admission d'air de l'invention selon un second mode de réalisation,
la figure 3 est une vue schématique en coupe du dispositif d'admission d'air selon un troisième mode de réalisation de l'invention,
la figure 4 montre schématiquement une variante de réservoir hydropneumatique anti-bélier avec dispositif de régulation d'air selon l'invention,
la figure 5 est une vue schématique en coupe du réservoir hydropneumatique anti-bélier avec dispositif de régulation d'air muni d'une chambre de stockage,
la figure 6 est une vue schématique en coupe d'une variante dû réservoir hydropneumatique anti-bélier avec dispositif de régulation d'air muni d'une chambre de stockage,
les figures 7 et 8 sont des vues schématiques en coupe d'un réservoir hydropneumatique anti-bélier avec dispositif de régulation d'air muni d'un dispositif d'admission d'air fixé au réservoir hydropneumatique selon deux variantes.

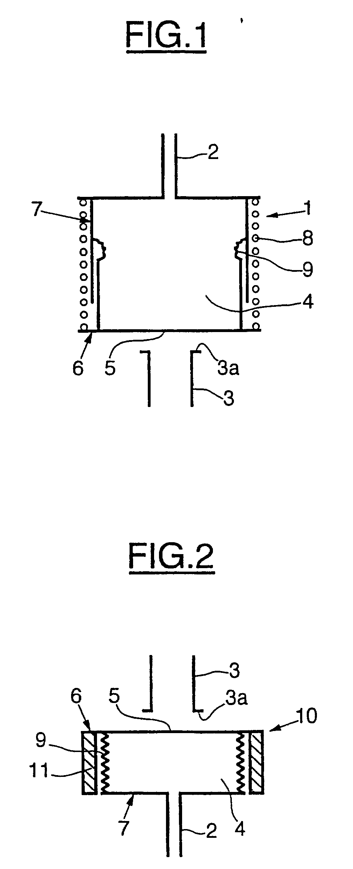

Sur la figure 1, le dispositif d'admission d'air 1 peut être relié par le tube 2 à une première partie de la conduite non représentée et par le tube 3 à une deuxième partie de la conduite non représentée. Le dispositif d'admission d'air 1 comprend une capacité étanche 4 de volume variable et reliée au tube 2. Une des extrémités de la capacité 4 est délimitée par une paroi plane 5 mobile et capable de venir en contact avec l'orifice 3a du tube 3. Le dispositif d'admission d'air 1 comprend une partie mobile 6 incluant la paroi plane 5 et délimitant la capacité 4 à son extrémité inférieure, une partie fixe 7 délimitant la capacité 4 à son extrémité supérieure et un moyen d'application de force qui tend à réduire le volume de la capacité 4, par exemple, un ressort spiral 8. L'étanchéité entre la partie mobile 6 et la partie fixe 7 est assurée par un joint d'étanchéité 9.

En fonctionnement, la capacité 4 est remplie de gaz, par exemple de l'air, soumis à la même pression que celle régnant dans la première partie de la conduite grâce au tube 2. En régime permanent, la pression de gaz dans la capacité 4 exerce une force suffisante pour vaincre l'action du ressort 8, plaquer la paroi plane 5 contre la surface d'extrémité 3a du tube 3 et obturer ledit tube 3. En fait, la masse de la partie mobile 6 s'ajoute à la force due à la pression de gaz dans la capacité 4 pour assurer l'obturation du tube 3. La raideur et la tension du ressort 8 sont déterminées de façon qu'une pression de gaz dans la capacité 4, inférieure à une pression seuil déclenche la remontée de la partie mobile 6 et l'ouverture du tube 3 afin que de l'air puisse entrer dans le tube 3 à la pression atmosphérique. Lorsque la pression dans le tube 2 et dans la capacité 4 dépasse à nouveau la pression seuil, la partie mobile 6 vient en contact de l'orifice ou surface d'extrémité 3a du tube 3 et l'obture.

Sur la figure 2, les éléments semblables à ceux de la figure 1 portent les mêmes références. Le dispositif d'admission d'air 10 comprend une partie mobile 6, une partie fixe 7, un moyen d'application de force 11 et un joint d'étanchéité 9. Dans ce mode de réalisation, le moyen d'application de force 11 est constitué par un contrepoids ou lest. Le fonctionnement est tout à fait similaire au dispositif d'admission d'air représenté sur la figure 1.

En régime permanent, la pression de gaz dans la capacité 4 exerce une force supérieure au poids du lest et de la partie mobile 6, et assure ainsi le contact entre la paroi plane 5 et la surface d'extrémité 3a du tube 3. Le tube 3 est donc obturé. En régime transitoire, lorsque la pression de gaz dans la capacité 4 devient inférieure à une pression seuil, la partie mobile 6 s'abaisse, libérant ainsi l'ouverture du tube 3 et mettant celui-ci à la pression atmosphérique. Lorsque la pression de gaz dans la capacité 4 dépasse à nouveau la pression seuil, la partie mobile 6 remonte et vient obturer le tube 3.

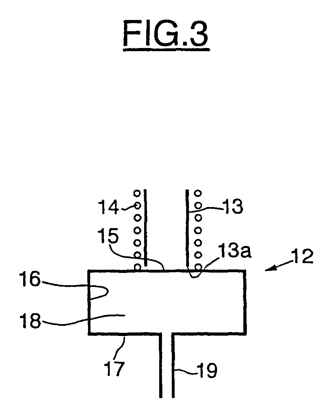

Sur la figure 3, le dispositif d'admission d'air 12 est conçu pour de très fortes pressions capables de déformer la paroi plane 15 qui en se bombant vient obturer l'orifice 13a de la canalisation 13. Le ressort 14 tend à écarter la paroi plane 15 de l'orifice 13a. La capacité 18 est définie entre les parois d'extrémité 15 et 17 et la paroi latérale 16. La paroi d'extrémité 17 est fixée au tube 19 référencé 2 sur les figures 1 et 2. Ainsi, la pression de gaz dans le tube 19 et dans la capacité 18 commande l'ouverture de l'orifice 13a du tube 13.

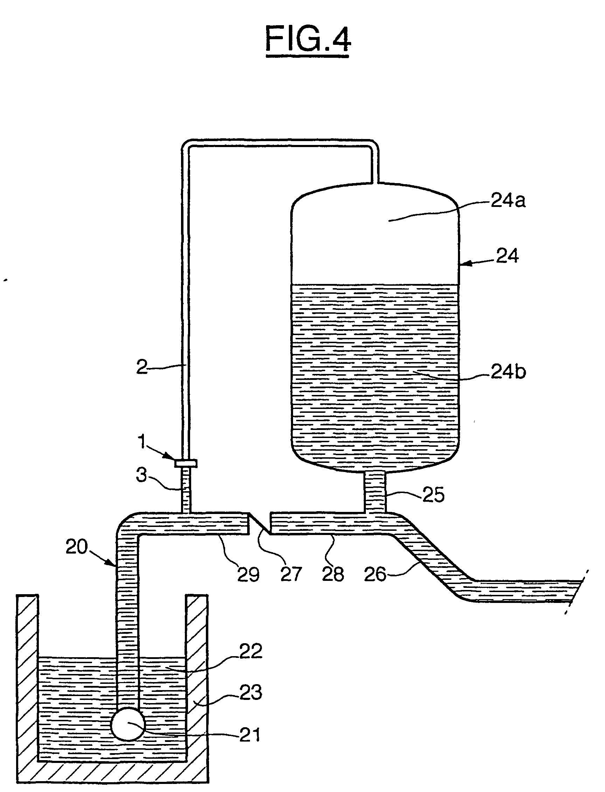

Sur la figure 4, le dispositif de régulation d'air équipe une conduite 20 qui est munie d'une pompe 21 afin de pomper le liquide 22 contenu dans la bâche 23. La conduite 20 est munie d'un réservoir hydropneumatique anti-bélier 24 qui est en communication avec la conduite 20 par la tubulure de raccordement 25. La conduite 20 est éventuellement munie d'un piège à air 26 afin d'éviter que de l'air introduit ne se déplace dans la conduite 20, ce qui peut être dangereux. Le dispositif de régulation d'air comprend un dispositif d'admission d'air 1 relié par un tube 2 à l'extrémité supérieure 24a du réservoir hydropneumatique 24 et par un tube 3 à la conduite 20. La conduite 20 comprend un clapet 27 disposé entre le tube 3 et la tubulure 25. Une première partie 28 de la conduite 20 est définie entre la tubulure 25 et le clapet 27. Une seconde partie 29 de la conduite 20 est définie entre le clapet 27 et la pompe 21. Le réservoir hydropneumatique 24 est partiellement rempli d'eau, le niveau de l'eau variant selon la pression régnant dans la première partie 28 de la conduite 20.

Lorsque la pompe 21 est à l'arrêt, la première partie 28 de la conduite 20 est soumise à la pression Pa. La pression de gaz dans le tube 2 est donc égale à la pression Pa qui est supérieure à la pression-seuil Po à laquelle le dispositif d'admission d'air 1 s'ouvre et permet l'admission d'air dans le tube 3. La conduite 20 reste donc entièrement remplie de liquide.

En régime permanent, la pompe 21 étant en fonctionnement, la conduite 20 est soumise à une pression Ps supérieure à la pression Pa. Le liquide se déplace dans la conduite 20 et le clapet 27 est ouvert.

En régime transitoire, lors de l'arrêt de la pompe 21, la pression dans la conduite 20 chute fortement. Pour compenser cette dépression le réservoir 24 se vidange, le clapet 27 se ferme, évitant ainsi un retour de liquide dans la bâche 23. Cette vidange du réservoir 24 entraîne une baisse de la pression de l'air contenu dans sa partie supérieure 24a. Si cette pression dans le réservoir 24 et, par conséquent, dans le tube 2 devient inférieure à la pression Po, le dispositif d'admission d'air 1 libère l'extrémité du tube 3 et permet la mise à la pression atmosphérique, la vidange d'eau et l'entrée d'air dans le tube 3 et la deuxième partie 29 de la conduite 20. Cette vidange d'eau est possible car la pompe 21 n'a pas de clapet de pied.

La quantité d'air introduite dans la deuxième partie 29 de la conduite 20 est fonction de la durée d'ouverture du tube 3 qui est elle-même fonction de la différence entre la pression dans la première partie 28 de la conduite 20 et la pression Po à laquelle le dispositif d'admission d'air 1 ouvre le tube 3. Ensuite le réservoir 24 entre dans la phase de remplissage et le dispositif d'admission d'air 1 obture à nouveau le tube 3 lorsque, par suite de ce remplissage, la pression dans le réservoir 24 dépasse la valeur Po. Plusieurs ouvertures et fermetures du tube 3 par le dispositif d'admission d'air 1 peuvent d'ailleurs se produire lors des phases successives de vidange et de remplissage du réservoir 24. Au démarrage suivant de la pompe 21, la pression dans la deuxième partie de la conduite 29 augmente, le clapet 27 s'ouvre et le liquide commence son mouvement dans l'ensemble de la conduite 20. L'air introduit dans la deuxième partie 29 de la conduite 20 passe dans la première partie 28 de la conduite 20 et pénètre par la tubulure de raccordement 25 dans le réservoir hydropneumatique 24, un piège à air éventuel 26 empêchant tout déplacement de l'air dans le reste de la conduite 20. Ainsi, l'air introduit dans la deuxième partie 29 de la conduite 20 en phase de dépression du liquide passe, au démarrage suivant de la pompe 21, dans le réservoir hydropneumatique 24 ce qui permet de le réalimenter automatiquement en air.

Si la pression de l'air contenu dans le réservoir hydropneumatique 24 est suffisante, aucune réalimentation en air n'a lieu lors d'un régime transitoire de dépression.

Un seul dispositif d'admission d'air 1 suffit même dans le cas où deux pompes fonctionnent en permutation car on peut raccorder le tube 3 aux deux refoulements.

Il est à noter, ce qui est intéressant lorsque le liquide pompé est, par exemple, de l'eau usée, que l'air piégé dans le tube 3, fermé antérieurement au démarrage de la pompe 21 par le dispositif d'admission d'air 1, empêche l'eau d'atteindre le sommet de ce tube 3 et d'y provoquer des dépôts susceptibles de nuire à une bonne étanchéité ultérieure.

Si la pompe 21 démarre de façon intempestive avant la fermeture du tube 3 par le dispositif d'admission d'air 1, l'eau risque de déborder du tube 3. Afin d'éviter ce problème, il est possible de munir le tube 3 d'un clapet ou de munir la commande de la pompe 21 d'un relais temporisé.

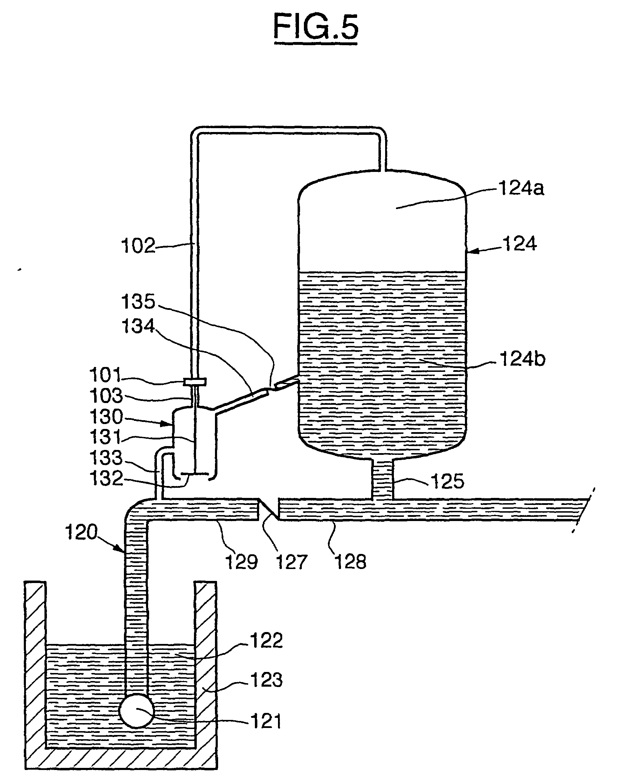

Sur la figure 5, les références des éléments semblables à ceux de la figure 4 ont été augmentées du nombre 100. Le dispositif de régulation d'air comprend une chambre de stockage 130 surmontée d'un dispositif d'admission d'air 101. Le tube 103 est fixé au sommet de la chambre de stockage 130 et peut être ouvert par le dispositif d'admission d'air 101 qui est en communication par le tube 102 avec le réservoir hydropneumatique 124. La chambre de stockage 130 est traversée par une tige de commande 131 dont l'extrémité supérieure est fixée à la partie mobile du dispositif d'admission d'air 101 et l'extrémité inférieure à une bonde 132 obturant l'extrémité inférieure de la chambre de stockage 130. La chambre de stockage 130 est en communication avec la deuxième partie 129 de la conduite 120 par le tube 133. La partie supérieure de la chambre de stockage 130 est en communication avec le réservoir hydropneumatique 124 par un tube 134 muni d'un clapet 135 afin d'éviter que de l'eau contenue dans le réservoir hydropneumatique puisse s'échapper dans la chambre de stockage 130.

En régime permanent de fonctionnement du moyen de pompage 121, le liquide s'écoule dans la conduite 120, le clapet 127 étant ouvert. La chambre de stockage 130 et les tubes 133 et 134 sont également remplis de liquide. La conduite 120 est soumise à une pression de service Ps. Le dispositif d'admission d'air 101 soumis à la pression Ps supérieure à la pression-seuil Po, obture l'extrémité du tube 103.

En régime transitoire, lors d'une phase de dépression due, par exemple, à l'arrêt du moyen de pompage 121, la pression de liquide dans la conduite 120 chute. Pour compenser cette dépression, le réservoir 124 se vidange, le clapet 127 se ferme, évitant ainsi un retour de liquide dans la bâche 123. Cette vidange du réservoir 124 entraîne une baisse de la pression de l'air contenu dans sa partie supérieure 124a. Si cette pression dans le réservoir 124 devient inférieure à la pression-seuil Po, la partie mobile du dispositif d'admission d'air 101 se soulève, libérant l'extrémité du tube 103, et ouvre la bonde 132 par l'intermédiaire de la tige de commande 131. La chambre de stockage 130 est donc simultanément mise à la pression atmosphérique et vidangée du liquide qu'elle contenait. Le liquide ainsi vidangé s'écoule à l'extérieur, par exemple, dans la bâche 123. Le clapet 135 du tube 134 est fermé évitant ainsi l'écoulement du liquide contenu dans le réservoir hydropneumatique 124 vers la chambre de stockage 130.

Ensuite le réservoir 124 entre dans la phase de remplissage et le dispositif d'admission d'air 101 obture à nouveau le tube 103 et ferme la bonde 132 grâce à la tige de commande 131 lorsque, par suite de ce remplissage, la pression dans le réservoir 124 dépasse la valeur Po. Plusieurs ouvertures et fermetures du tube 103 et de la bonde 132 peuvent d'ailleurs se produire lors des phases successives de vidange et de remplissage du réservoir 124.

Au démarrage suivant du moyen de pompage, l'eau remplit de nouveau la chambre de stockage 130 en passant par le tube 133 et l'air contenu dans la chambre de stockage 130 s'échappe progressivement par le tube 134 dans le réservoir hydropneumatique 124, le clapet 135 étant alors ouvert. Le tube 134 débouche dans la partie inférieure 124b en eau, du réservoir hydropneumatique 124. L'air traverse la partie en eau sous la forme de bulles et rejoint la partie supérieure 124a du réservoir hydropneumatique 124. Si la pression de l'air contenu dans le réservoir hydropneumatique 124 est suffisante, aucune réalimentation en air n'a lieu lors d'un régime transitoire de dépression.

Dans le cas contraire, la quantité d'air introduite dans le réservoir hydropneumatique 124 est fonction du temps d'ouverture de l'extrémité du tube 103 et de la bonde 132 et donc de la différence entre la pression dans le réservoir hydropneumatique 124 -et la pression-seuil Po d'admission d'air par le dispositif d'admission d'air 101. Ce dispositif ne nécessite pas de piège à air dans la mesure où aucune introduction d'air n'a lieu dans la conduite 120. Si la chambre de stockage 130 est de volume faible et si la pression de gaz dans le réservoir hydropneumatique 124 est très inférieure à la pression souhaitée c'est-à-dire à la pression-seuil Po, la réalimentation complète du réservoir hydropneumatique 124 en air sera réalisé après plusieurs régimes transitoires dûs à des arrêts de pompes.

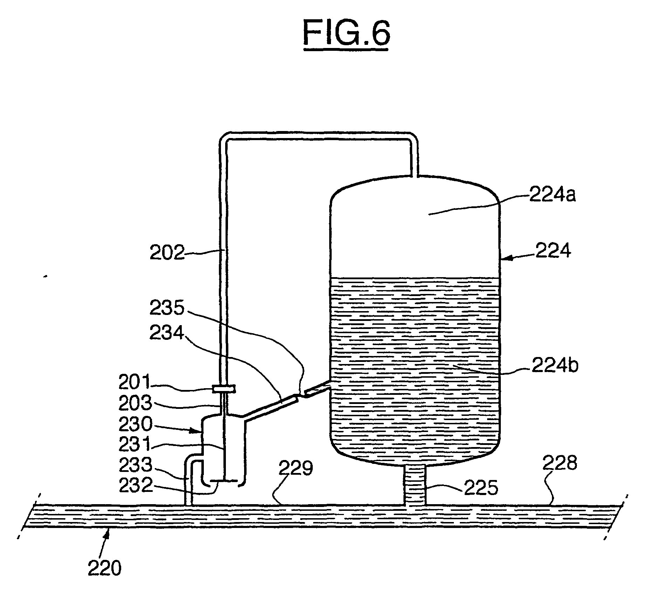

Sur la figure 6, les références des éléments semblables aux éléments de la figure 4 ont été augmentées du nombre 200. Le type de montage représenté ici convient à tous les cas, quel que soit l'emplacement et la cote du réservoir hydropneumatique 224 le long de la conduite 220 et par rapport à un moyen de pompage éventuel, non représenté et le nombre de pompes qu'il comporte. Le fonctionnement est identique à celui du dispositif précédemment décrit. Le tube 233 de communication entre la conduite 220 et la chambre de stockage 230 doit être de faible diamètre ou munie d'un étranglement, éventuellement réglable, créant des pertes de charge singulières de façon que, lors d'une vidange de la chambre de stockage 230 par la bonde 232, l'apport d'eau par la conduite 220 via ce tube 233, soit faible et ne nuise donc pas de façon significative à la vidange de la chambre de stockage 230.

Lors d'une phase de dépression, due, par exemple, à l'arrêt d'une pompe ou à la fermeture d'une vanne située en amont ou à l'ouverture d'une vanne située en aval, si la pression de gaz contenu dans la partie supérieure 224a du réservoir hydropneumatique 224 est inférieure à la pression-seuil Po d'ouverture du tube 203 par le dispositif d'admission d'air 201, la chambre de stockage 230 est vidangée et remplie d'une quantité d'air fonction notamment de la différence entre la pression dans le réservoir hydropneumatique 224 et la pression-seuil Po. Si la chambre de stockage 230 est de volume faible et si la pression de gaz dans le réservoir hydropneumatique 224 est très inférieure à la pression souhaitée, c'est-à-dire à la pression-seuil Po, la réalimentation complète du réservoir hydropneumatique 224 en air sera réalisée après plusieurs régimes transitoires dûs à des arrêts de pompes ou à des manoeuvres de divers appareils tels que des vannes.

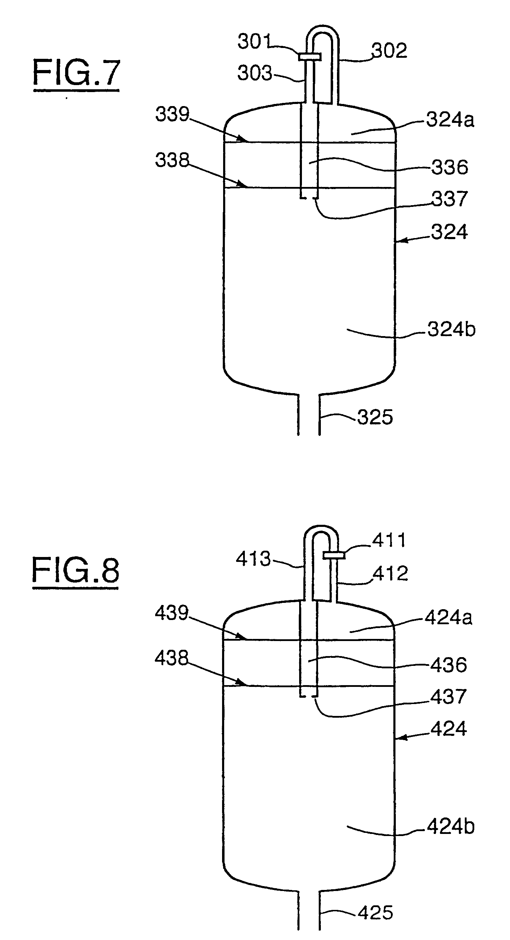

Sur la figure 7, les références des éléments semblables à ceux de la figure 4 ont été augmentées du nombre 300. Le réservoir hydropneumatique anti-bélier 324 a une partie supérieure 324a contenant du gaz, en général de l'air, et une partie inférieure 324b contenant du liquide. Le réservoir hydropneumatique 324 est en communication par la tubulure de raccordement 325 avec une conduite non représentée dont il doit réguler la pression. Le réservoir hydropneumatique 324 du type "réservoir anti-bélier à régulation d'air automatique" comprend, fixé à son extrémité supérieure, un tube plongeant 336 et un dispositif d'admission d'air 301. La chambre qui forme le moyen de détection de la pression du dispositif d'admission d'air 301 est en communication par un tube 302 avec l'extrémité supérieure 324a du réservoir hydropneumatique 324 en dehors du tube plongeant 336. La canalisation 303 dont l'extrémité supérieure peut être obturée par le dispositif d'admission d'air 301 est en communication avec l'intérieur du tube plongeant 336. Le tube plongeant 336 peut être muni à son extrémité inférieure d'un dispositif de freinage de la remontée de l'eau 337 pour éviter que l'eau n'atteigne le dispositif d'admission d'air 301 avant qu'il n'obture le tube 303.

En régime permanent de pompage, le niveau de liquide contenu dans le réservoir hydropneumatique 324 peut varier, par exemple, entre le niveau 338 et le niveau 339. Lorsqu'un arrêt de pompe se produit :
- le réservoir 324 se vidange alors et fonctionne d'abord en réservoir hydropneumatique anti-bélier classique, la détente de l'air s'effectuant jusqu'à ce que cette pression soit suffisamment basse pour que le dispositif d'admission d'air 301 dégage l'ouverture du tube 303, ce qui permet à la pression atmosphérique de s'exercer à l'intérieur du réservoir 324 qui continue à se vidanger, mais comme une cheminée d'équilibre, jusqu'à la fin de vidange;
- à la vidange succède le remplissage, soit sans freinage sur l'air s'échappant par le tube 303, soit avec freinage sur cet air grâce à un organe dissymétrique (clapet muni de trous calibrés par exemple) placé à la base du tube plongeant 336. Le dispositif d'admission d'air 301 ferme la canalisation 303 lorsque la pression à l'intérieur du réservoir 324 dépasse la valeur de réglage.

On voit donc que ce dispositif permet une régulation automatique de la quantité d'air contenu dans le réservoir hydropneumatique 324 sans apport d'énergie extérieure et quelle que soit la nature du liquide dans la conduite.

Sur la figure 8, les références des éléments semblables à ceux de la figure 7 ont été augmentées du nombre 100. Le dispositif d'admission d'air 411 est identique à celui de la variante représentée sur la figure 2. La chambre du dispositif d'admission d'air 411 est en communication par le tube 412 avec la partie supérieure 424a du réservoir hydropneumatique 424 servant de chambre de compression. La partie mobile du dispositif d'admission d'air 411 vient obturer l'extrémité du tube 413 en communication avec le tube plongeant 436 fixé au sommet du réservoir hydropneumatique 424. Comme précédemment, le tube plongeant 436 est mis en communication avec l'atmosphère lorsque la pression dans la chambre de compression et donc dans la chambre du dispositif d'admission d'air 411 n'est pas suffisante et peut être muni d'un dispositif de freinage 437.

Grâce à l'invention et dans tous les modes de réalisation, on réalise un dispositif d'admission d'air et un dispositif de régulation d'air particulièrement simples et économiques, ne nécessitant pas d'apport d'énergie extérieure et pouvant être utilisés avec des types variés de liquides. Les réservoirs hydropneumatiques utilisés n'ont pas besoin de comporter de vessies ou de compresseurs avec leur automaticité. Le dispositif de régulation d'air présente une grande sûreté de fonctionnement. Il n'agit que s'il existe un déficit d'air dans le réservoir hydropneumatique et la régulation d'air est d'autant plus importante que ce déficit est grand. Il y a donc bien régulation d'air automatique.

## Revendications

1. Réservoir hydropneumatique anti-bélier avec dispositif de régulation d'air dans une conduite hydraulique (20) comprenant un dispositif d'admission d'air (1) capable d'admettre de l'air lors d'une chute de pression du liquide dans la conduite, le réservoir hydropneumatique étant en communication avec la conduite, **caractérisé par le fait qu'**il comprend un moyen de détection de la pression du liquide contenu dans le réservoir hydropneumatique (24), ledit moyen de détection comprenant une capacité étanche (4, 18) de volume variable et un moyen d'ouverture d'un orifice capable d'introduire un volume d'air extérieur dans un réservoir en déficit d'air, ledit orifice étant en communication avec une partie comprenant ledit réservoir ou une partie de conduite en amont dudit réservoir, ou une chambre de stockage en communication avec ledit réservoir.

2. Réservoir hydropneumatique anti-bélier selon la revendication 1, **caractérisé en ce que** le moyen d'ouverture comprend une partie plane (5) solidaire d'une partie mobile (6) de la capacité (4), en contact avec une extrémité d'un tube (3) en communication avec ladite partie ou chambre, de façon à obturer ladite extrémité du tube (3) et capable de libérer l'extrémité du tube (3) pour admettre de l'air dans ladite partie ou chambre.

3. Réservoir hydropneumatique anti-bélier selon la revendication 2, **caractérisé en ce que** la capacité (4) est définie par une partie fixe (7) solidaire d'un tube (2) en communication avec le réservoir, une partie mobile (6) et un moyen d'application d'une force tendant à réduire le volume de la capacité (4) et à libérer l'extrémité du tube (3) en communication avec ladite partie ou chambre, l'étanchéité entre les parties fixe et mobile étant assurée par un joint souple (9).

4. Réservoir hydropneumatique anti-bélier selon la revendication 3, **caractérisé en ce que** le moyen d'application de la force comprend un ressort (8) ou un contre poids (11).

5. Réservoir hydropneumatique anti-bélier selon la revendication 1, **caractérisé en ce que** la capacité étanche (18) comprend une paroi plane déformable (15) capable d'obturer l'extrémité d'un tube (13) en communication avec ladite partie ou chambre.

6. Réservoir hydropneumatique anti-bélier selon l'une quelconque des revendications précédentes, **caractérisé en ce que** ledit moyen de détection de la pression est en communication avec une partie supérieure du réservoir hydropneumatique anti-bélier.

7. Réservoir hydropneumatique anti-bélier selon l'une quelconque des revendications précédentes, **caractérisé en ce que** l'orifice (3a) est en communication avec une chambre formée par ladite partie (29) de la conduite (20) située à proximité d'un moyen de pompage (21).

8. Réservoir hydropneumatique anti-bélier selon la revendication 7, **caractérisé en ce que** ladite partie (29) de la conduite (20) est définie entre le moyen de pompage (21) et un clapet (27) disposé en amont de la tubulure de raccordement (25) avec le réservoir hydro-pneumatique (24).

9. Réservoir hydropneumatique anti-bélier selon l'une quelconque des revendications 1 à 6, **caractérisé en ce qu'**un orifice (3a) est en communication avec l'extrémité supérieure d'une chambre de stockage (130) à vidange commandée par le dispositif d'admission d'air (101), cette chambre étant en communication avec ladite partie (129).

10. Réservoir hydropneumatique anti-bélier selon la revendication 9, **caractérisé en ce que** la chambre de stockage (130) comprend une bonde de vidange (132) située à son extrémité inférieure, solidaire d'une tige (131) fixée au moyen d'ouverture du dispositif d'admission d'air (101) pour ouvrir la bonde (132) lors de l'admission de l'air et est en communication avec ladite partie (129).

11. Réservoir hydropneumatique anti-bélier selon l'une quelconque des revendications 9 ou 10, **caractérisé en ce que** la partie supérieure de la chambre de stockage (130) est en communication avec le réservoir hydropneumatique (124) par un tube (134), l'air contenu dans la chambre de stockage (130) pouvant s'échapper dans le réservoir hydropneumatique (124).

12. Réservoir hydropneumatique anti-bélier selon la revendication 11, **caractérisé en ce que** le tube (134) est muni d'un clapet (135) pour empêcher l'eau contenue dans le réservoir hydropneumatique (124) de s'écouler dans la chambre de stockage (130).

13. Réservoir hydropneumatique anti-bélier selon la revendication 11 ou 12, **caractérisé en ce que** le tube (233) reliant la conduite (220) à la chambre de stockage (230) est de faible diamètre ou muni d'un étranglement créant des pertes de charge singulières, éventuellement réglables, réduisant les apports d'eau dans la chambre de stockage (230), à partir de la conduite (220) et via ce tube (233).

14. Réservoir hydropneumatique anti-bélier selon l'une quelconque des revendications 1 à 6, le réservoir hydropneumatique anti-bélier (324) fonctionnant alternativement en réservoir hydropneumatique classique et en cheminée d'équilibre, **caractérisé en ce que** le moyen de détection est en communication avec une première partie (324a) du réservoir hydropneumatique (324) formant chambre de compression, et le moyen d'ouverture d'un orifice en communication avec ladite partie ou chambre est en communication avec une deuxième partie (324b) du réservoir hydropneumatique (324) de façon à faire entrer de l'air lorsque la pression d'air dans le réservoir hydropneumatique (324) est insuffisante.

15. Réservoir hydropneumatique anti-bélier selon la revendication 14, **caractérisé en ce que** le réservoir hydropneumatique (324) est muni à son extrémité supérieure d'un tube plongeant (336) pouvant être muni d'un moyen de freinage sur l'air au remplissage (337) pour éviter notamment que l'eau n'atteigne le dispositif d'admission d'air (301) avant sa fermeture lors du remplissage du réservoir hydropneumatique (324).

16. Procédé d'admission d'air dans une conduite hydraulique (20) munie d'un réservoir hydropneumatique (24) en communication avec une première partie (28) de la conduite (20), **caractérisé par le fait que** :
- en régime transitoire, lors d'une phase de dépression du liquide dans la conduite (20), la baisse de la pression de l'air contenu dans le réservoir hydropneumatique (24), en deçà d'une valeur de réglage (Po), commande, sans apport d'énergie extérieure, l'admission dans une deuxième partie (29) de la conduite (20) d'une quantité d'air fonction notamment de la différence entre la pression de l'air dans le réservoir hydropneumatique (24) et la valeur de réglage (Po),
- lors d'une phase d'augmentation de la pression, l'admission de l'air dans la deuxième partie (29) de la conduite (20) est stoppée,
- au démarrage suivant du mouvement du liquide dans la conduite (20), l'air admis dans la deuxième partie (29) de la conduite (20) passe dans la première partie (28) de la conduite (20) puis dans le réservoir hydropneumatique (24).

17. Procédé d'admission d'air dans une conduite (120,220) munie d'un réservoir hydropneumatique (124,224) en communication avec une première partie (128,228) de la conduite (120,220), **caractérisé par** les étapes suivantes :
- en régime transitoire lors d'une phase de dépression, la baisse de la pression de l'air contenu dans le réservoir hydropneumatique (124,224), en deçà d'une valeur de réglage (Po) commande, sans apport d'énergie extérieure, la vidange du liquide contenu dans une chambre de stockage (130,230) et l'admission dans ladite chambre de stockage (130,230) d'une quantité d'air fonction notamment de la différence entre la pression d'air dans le réservoir hydropneumatique (124,224) et la valeur de réglage (Po),
- lors d'une phase d'augmentation de la pression, l'admission d'air dans la chambre de stockage (130,230) et la vidange du liquide contenu dans ladite chambre de stockage (130,230) sont stoppées,
- le mouvement du liquide dans la conduite (120,220) qui est, soit une reprise d'écoulement, due par exemple au démarrage d'un moyen de pompage (121), soit une continuation d'écoulement, conduit à un remplissage progressif en liquide de la chambre de stockage (130,230), l'air contenu dans ladite chambre de stockage (130,230) s'échappant progressivement dans le réservoir hydropneumatique (124,224).

## Claims

1. Hydropneumatic anti-hammer tank with a device for regulating air in a hydraulic pipe (20), comprising an air intake device (1) capable of admitting air in the event of a pressure drop of the liquid in the pipe, the hydropneumatic tank being in communication with the pipe, **characterized in that** it comprises a means for detecting the pressure of the liquid contained in the hydropneumatic tank (24), the said detection means comprising a leaktight compartment (4, 18) of variable volume and a means for opening a hole capable of introducing a volume of external air into a tank having an air deficit, the said hole being in communication with a part comprising the said tank or a pipe part upstream of the said tank, or a storage chamber in communication with the said tank.

2. Hydropneumatic anti-hammer tank according to Claim 1, **characterized in that** the opening means comprises a plane part (5) secured to a mobile part (6) of the compartment (4), which is in contact with an end of a tube (3) in communication with the said part or chamber, so as to shut the said end of the tube (3), and which is capable of freeing the end of the tube (3) in order to admit air into the said part or chamber.

3. Hydropneumatic anti-hammer tank according to Claim 2, **characterized in that** the compartment (4) is defined by a fixed part (7) secured to a tube (2) in communication with the tank, a mobile part (6) and a means for applying a force tending to reduce the volume of the compartment (4) and to free the end of the tube (3) in communication with the said part or chamber, the leaktightness between the fixed and mobile parts being ensured by a flexible seal (9).

4. Hydropneumatic anti-hammer tank according to Claim 3, **characterized in that** the means for applying the force comprises a spring (8) or a counterweight (11).

5. Hydropneumatic anti-hammer tank according to Claim 1, **characterized in that** the leaktight compartment (18) comprises a deformable plane wall (15) capable of shutting the end of a tube (13) in communication with the said part or chamber.

6. Hydropneumatic anti-hammer tank according to any one of the preceding claims, **characterized in that** the said means for detecting the pressure is in communication with an upper part of the hydropneumatic anti-hammer tank.

7. Hydropneumatic anti-hammer tank according to any one of the preceding claims, **characterized in that** the hole (3a) is in communication with a chamber formed by the said part (29) of the pipe (20) situated close to a pumping means (21).

8. Hydropneumatic anti-hammer tank according to Claim 7, **characterized in that** the said part (29) of the pipe (20) is defined between the pumping means (21) and a valve (27) arranged upstream of the conduit (25) connecting with the hydropneumatic anti-hammer tank (24).

9. Hydropneumatic anti-hammer tank according to any one of Claims 1 to 6, **characterized in that** a hole (3a) is in communication with the upper end of a storage chamber (130) whose drainage is caused by the air intake device (101), this chamber being in communication with the said part (129).

10. Hydropneumatic anti-hammer tank according to Claim 9, **characterized in that** the storage chamber (130) comprises a drainage bung (132) situated at its lower end, which is secured to a rod (131) fixed to the means for opening the air intake device (101), in order to open the bung (132) when the air is being admitted, and it is in communication with the said part (129).

11. Hydropneumatic anti-hammer tank according to either one of Claims 9 and 10, **characterized in that** the upper part of the storage chamber (130) is in communication with the hydropneumatic tank (124) via a tube (134), the air contained in the storage chamber (130) being able to escape into the hydropneumatic tank (124).

12. Hydropneumatic anti-hammer tank according to Claim 11, **characterized in that** the tube (134) is provided with a valve (135) for preventing the water contained in the hydropneumatic tank (124) from flowing into the storage chamber (130).

13. Hydropneumatic anti-hammer tank according to Claim 11 or 12, **characterized in that** the tube (233) joining the pipe (220) to the storage chamber (230) has a small diameter or is provided with a constriction creating singular, optionally regulatable, head losses reducing the amounts of water supplied into the storage chamber (230), from the pipe (220) and via this tube (233).

14. Hydropneumatic anti-hammer tank according to any one of Claims 1 to 6, the hydropneumatic anti-hammer tank (324) functioning alternately as a conventional hydropneumatic tank and as a surge tank, **characterized in that** the detection means is in communication with a first part (324a) of the hydropneumatic tank (324), forming a compression chamber, and the means for opening a hole in communication with the said part or chamber is in communication with a second part (324b) of the hydropneumatic tank (324), so as to make air enter when the air pressure in the hydropneumatic tank (324) is insufficient.

15. Hydropneumatic anti-hammer tank according to Claim 14, **characterized in that** the hydropneumatic tank (324) is provided at its upper end with a semi-immersed tube (336), which may be provided with a means (337) for retardation of the air during filling, in particular in order to prevent the water from reaching the air intake device (301) before it is closed when the hydropneumatic tank (324) is being filled.

16. Process for admitting air into a hydraulic pipe (20) provided with a hydropneumatic tank (24) in communication with a first part (28) of the pipe (20), **characterized in that**:
- in a transient regime, during a phase of reduced pressure of the liquid in the pipe (20), the lowering of the pressure of the air contained in the hydropneumatic tank (24), below a setpoint value (Po), causes, without supplying external energy, the admission into a second part (29) of the pipe (20) of a quantity of air which depends, in particular, on the difference between the pressure of the air in the hydropneumatic tank (24) and the setpoint value (Po),
- during a phase of increase in the pressure, the admission of the air into the second part (29) of the pipe (20) is stopped,
- upon start-up following movement of the liquid in the pipe (20), the air admitted into the second part (29) of the pipe (20) passes into the first part (28) of the pipe (20), then into the hydropneumatic tank (24).

17. Process for admitting air into a pipe (120, 220) provided with a hydropneumatic tank (124, 224) in communication with a first part (128, 228) of the pipe (120, 220), **characterized by** the following steps:
- in a transient regime, during a phase of reduced pressure, the lowering of the pressure of the air contained in the hydropneumatic tank (124, 224), below a setpoint value (Po) causes, without supplying external energy, drainage of the liquid contained in a storage chamber (130, 230) and the admission into the said storage chamber (130, 230) of a quantity of air which depends, in particular, on the difference between the air pressure in the hydropneumatic tank (124, 224) and the setpoint value (Po),
- during a phase of increase in the pressure, the admission of air into the storage chamber (130, 230) and the drainage of the liquid contained in the said storage chamber (130, 230) are stopped,
- the movement of the liquid in the pipe (120, 220), which is either a resumption of flow, due for example to the start-up of a pumping means (121), or a continuation of flow, leads to progressive filling of the storage chamber (130, 230) with liquid, the air contained in the said storage chamber (130, 230) escaping progressively into the hydropneumatic tank (124, 224).

## Patentansprüche

1. Hydropneumatischer Anti-Druckstoß- bzw. Anti-Wasserschlag-Behälter mit einer Luftregelungsvorrichtung in einer hydraulischen Leitung (20) mit einer Lufteinlassvorrichtung (1), die bei einem Druckabfall der Flüssigkeit in der Leitung Luft einlassen kann, wobei der hydropneumatische Behälter in Verbindung mit der Leitung steht, **dadurch gekennzeichnet, dass** er ein Mittel zur Erfassung des Drucks der in dem hydropneumatischen Behälter (24) enthaltenen Flüssigkeit umfasst, wobei das Erfassungsmittel eine dichte Kammer (4,18) variablen Volumens und ein Öffnungsmittel einer Öffnung umfasst, über die ein Außenluftvolumen in einen Behälter mit Luftmangel eingeleitet werden kann, wobei die Öffnung mit einem Abschnitt in Verbindung steht, der den Behälter oder einen Abschnitt der Leitung stromauf von dem Behälter oder eine mit dem Behälter in Verbindung stehende Speicherkammer umfasst.

2. Hydropneumatischer Anti-Druckstoß-Behälter nach Anspruch 1, **dadurch gekennzeichnet, dass** das Öffnungsmittel einen planen Abschnitt (5) umfasst, der mit einem mobilen Abschnitt (6) der Kammer (4) einstückig bzw. fest verbunden ist und mit einem Ende eines mit dem Abschnitt oder der Kammer in Verbindung stehenden Rohrs (3) so in Kontakt steht, dass es das Ende des Rohrs (3) verschließt und das Ende des Rohrs freigeben kann, um in den Abschnitt oder die Kammer Luft einzulassen.

3. Hydropneumatischer Anti-Druckstoß-Behälter nach Anspruch 2, **dadurch gekennzeichnet, dass** die Kammer (4) durch einen feststehenden Abschnitt (7), der mit einem in Verbindung mit dem Behälter stehenden Rohr (2) fest verbunden ist, einen mobilen Abschnitt (6) und durch ein Mittel zur Aufbringung einer Kraft, die dazu tendiert, das Volumen der Kammer (4) zu reduzieren und das in Verbindung mit dem Abschnitt oder der Kammer stehende Ende des Rohrs (3) freizugeben, festgelegt ist, wobei die Dichtheit zwischen dem feststehenden und dem beweglichen Abschnitt durch eine elastische Dichtung (9) bewerkstelligt wird.

4. Hydropneumatischer Anti-Druckstoß-Behälter nach Anspruch 3, **dadurch gekennzeichnet, dass** das Kraftaufbringungsmittel eine Feder (8) oder ein Gegengewicht (11) umfasst.

5. Hydropneumatischer Anti-Druckstoß-Behälter nach Anspruch 1, **dadurch gekennzeichnet, dass** die dichte Kammer (18) eine verformbare ebene Wand (15) aufweist, die das in Verbindung mit dem Abschnitt oder der Kammer stehende Ende eines Rohrs (13) verschließen kann.

6. Hydropneumatischer Anti-Druckstoß-Behälter nach einem der vorangehenden Ansprüche, **dadurch gekennzeichnet, dass** das Mittel zur Erfassung des Drucks mit einem oberen Abschnitt des hydropneumatischen Anti-Druckstoß-Behälters in Verbindung steht.

7. Hydropneumatischer Anti-Druckstoß-Behälter nach einem der vorangehenden Ansprüche, **dadurch gekennzeichnet, dass** die Öffnung (3a) mit einer Kammer in Verbindung steht, die von dem in der Nähe eines Pumpmittels (21) gelegenen Abschnitt (29) der Leitung (20) gebildet ist.

8. Hydropneumatischer Anti-Druckstoß-Behälter nach Anspruch 7, **dadurch gekennzeichnet, dass** der Abschnitt (29) der Leitung (20) zwischen dem Pumpmittel (21) und einem stromauf der Verbindungsleitung (25) mit dem hydropneumatischen Behälter (24) angeordneten Ventil (27) festgelegt ist.

9. Hydropneumatischer Anti-Druckstoß-Behälter nach einem der Ansprüche 1 bis 6, **dadurch gekennzeichnet, dass** eine Öffnung (3a) mit dem oberen Ende einer Speicherkammer (13) mit von der Lufteinlassvorrichtung (101) gesteuerter Entleerung in Verbindung steht, wobei diese Kammer mit dem Abschnitt (129) in Verbindung steht.

10. Hydropneumatischer Anti-Druckstoß-Behälter nach Anspruch 9, **dadurch gekennzeichnet, dass** die Speicherkammer (130) eine Abflussöffnung (132) aufweist, die an ihrem unteren Ende gelegen ist und mit einer am Öffnungsmittel der Lufteinlassvorrichtung (101) befestigten Stange (131) einstückig bzw. fest verbunden ist, um die Abflussöffnung (132) beim Einlassen der Luft zu öffnen, und dass sie mit dem Abschnitt (129) in Verbindung steht.

11. Hydropneumatischer Anti-Druckstoß-Behälter nach Anspruch 9 oder 10, **dadurch gekennzeichnet, dass** der obere Abschnitt der Speicherkammer (130) mit dem hydropneumatischen Behälter (124) über ein Rohr (134) in Verbindung steht, wobei die in der Speicherkammer (130) enthaltene Luft in den hydropneumatischen Behälter (124) entweichen kann.

12. Hydropneumatischer Anti-Druckstoß-Behälter nach Anspruch 11, **dadurch gekennzeichnet, dass** das Rohr (134) mit einem Ventil (135) versehen ist, um zu vermeiden, dass das in dem hydropneumatischen Behälter (124) enthaltene Wasser in die Speicherkammer (130) fließt.

13. Hydropneumatischer Anti-Druckstoß-Behälter nach Anspruch 11 oder 12, **dadurch gekennzeichnet, dass** das die Leitung (220) mit der Speicherkammer (230) verbindende Rohr (233) einen geringen Durchmesser aufweist oder mit einer Verengung bzw. Einschnürung versehen ist, welche einzelne, eventuell regelbare Mengenabnahmen erzeugt und die Wasserzufuhr zu der Speicherkammer (230) von der Leitung (220) aus und über dieses Rohr (233) reduziert.

14. Hydropneumatischer Anti-Druckstoß-Behälter nach einem der Ansprüche 1 bis 6, wobei der hydropneumatische Anti-Druckstoß-Behälter (324) alternativ als herkömmlicher hydropneumatischer Behälter oder als Ausgleichs(luft)schacht funktioniert, **dadurch gekennzeichnet, dass** das Erfassungsmittel mit einem eine Kompressionskammer bildenden ersten Abschnitt (324a) des hydropneumatischen Behälters (324) in Verbindung steht, und das Öffnungsmittel einer mit dem Abschnitt oder der Kammer in Verbindung stehenden Öffnung mit einem zweiten Abschnitt (324b) des hydropneumatischen Behälters (324) so in Verbindung steht, dass Luft eingelassen wird, wenn der Luftdruck in dem hydropneumatischen Behälter (324) unzureichend ist.

15. Hydropneumatischer Anti-Druckstoß-Behälter nach Anspruch 14, **dadurch gekennzeichnet, dass** der hydropneumatische Behälter (324) an seinem oberen Ende mit einem Tauchrohr (336) versehen ist, das mit einem Mittel zum Abdrosseln der Luft beim Auffüllen (337) versehen ist, um insbesondere zu vermeiden, dass das Wasser die Lufteinlassvorrichtung (301) vor deren Verschluss während des Auffüllens des hydropneumatischen Behälters (324) erreicht.

16. Verfahren zum Einlassen von Luft in eine hydraulische Leitung (20), die mit einem hydropneumatischen Behälter (24) versehen ist, der mit einem ersten Abschnitt (28) der Leitung (20) in Verbindung steht, **dadurch gekennzeichnet, dass**:
im Übergangsstadium während einer Druckminderungsphase der Flüssigkeit in der Leitung (20) der Druckabfall der in dem hydropneumatischen Behälter (24) enthaltenen Luft diesseits eines Regelwerts (Po) ohne äußere Energiezufuhr den Einlass einer Luftmenge in einen zweiten Abschnitt (29) der Leitung (20), insbesondere als Funktion der Differenz zwischen dem Luftdruck in dem hydropneumatischen Behälter (24) und dem Regelwert (Po), steuert
während einer Phase der Druckzunahme der Einlass von Luft in den zweiten Abschnitt (29) der Leitung (20) gestoppt wird,
bei dem folgenden Beginn der Bewegung der Flüssigkeit in der Leitung (20) die in den zweiten Abschnitt (29) der Leitung (20) eingelassene Luft in den ersten Abschnitt (28) der Leitung (20) und dann in den hydropneumatischen Behälter (24) übergeht.

17. Verfahren zum Einlassen von Luft in eine Leitung (120,220), die mit einem hydropneumatischen Behälter (124,224) versehen ist, der mit einem ersten Abschnitt (128,228) der Leitung (120,220) in Verbindung steht, **gekennzeichnet durch** die folgenden Schritte:
im Übergangsstadium während einer Druckminderungsphase steuert der Druckabfall der in dem hydropneumatischen Behälter (124,224) enthaltenen Luft diesseits eines Regelwerts (Po) ohne äußere Energiezufuhr das Ablassen der in der Speicherkammer (130,230) enthaltenen Flüssigkeit und das Einlassen einer Luftmenge in die Speicherkammer (130,230), die insbesondere von der Differenz zwischen dem Luftdruck in dem hydropneumatischen Behälter (124,224) und dem Regelwert (Po) abhängt,
während einer Phase des Druckanstiegs werden das Einlassen von Luft in die Speicherkammer (130,230) und das Ablassen von Flüssigkeit, die in der Speicherkammer (130,230) enthalten ist, gestoppt,
die Bewegung der Flüssigkeit in der Leitung (120,220)., die entweder eine Wiederaufnahme des Fließvorgangs, beispielsweise in Folge des Starts eines Pumpmittels (121) oder eine Fortsetzung des Fließvorgangs ist, führt zu einem fortschreitenden Auffüllen der Speicherkammer (130,230) mit Flüssigkeit, wobei die in der Speicherkammer (130,230) enthaltene Luft progressiv in den hydropneumatischen Behälter (124,224) entweicht.
